Europäisches Patentamt

(19) European Patent Office

Office européen des brevets

(11) Publication number: **0 032 272**

A2

(12) **EUROPEAN PATENT APPLICATION**

(21) Application number: **80201243.5**

(22) Date of filing: **29.12.80**

(51) Int. Cl.³: **E 02 D 15/08**
**E 02 D 3/11, F 24 J 3/02**

(30) Priority: **11.01.80 SE 8000226**

(43) Date of publication of application:
**22.07.81 Bulletin 81/29**

(84) Designated Contracting States:
**AT BE CH DE FR GB IT LI LU NL**

(71) Applicant: **Thermopälning Konsult och Handelsbolag**
**Ekenäs 373**
**S-430 40 Särö(SE)**

(72) Inventor: **Knopp, Rune**
**Ekenäs 373**
**S-430 40 Särö(SE)**

(74) Representative: **Roth, Michel et al,**
**GÖTEBORGS PATENTBYRA AB Box 5005**
**S-402 21 Göteborg(SE)**

(54) **A method and a device for absorbing and emitting heat or cold from the ground.**

(57) A method and a device for locating a coiled pipe (16) into the ground, vertically or inclined, said coiled pipe working as a heat exchanger in a heat pump system. In order to decrease operations in gardens or other ground surrounding the building, which is to be heated, or to make these operations needless, and in order to simplify the locating of coiled pipes in the soil it is suggested that the coiled pipe (16) is arranged on the outside of a driving means (11), e.g. a pile, a tube (30), a basket (28) or the like, that the coiled pipe is surrounded by a protective jacket (20), and that these are brought down together, either along the pile already located in the ground or in connection with the driving of the pile to the required depth in the ground, and that pipings (17, 18), coming from the coiled pipe, are drawn in the space arisen from the soil, which has been forced aside by said protective jacket, so that a connection is established between the coiled pipe (16) and the ground surface.

FIG.1

# A METHOD AND A DEVICE FOR ABSORBING AND EMITTING HEAT OR COLD FROM THE GROUND

The present invention refers to a method for locating a coiled pipe into the ground, vertically or inclined, said coiled pipe working as a heat exchanger in a heat pump system.

## Background of the invention

Absorbtion of heat by indirect interchange of heat from the ground has been practised since long especially for detached houses, at which said heat has been transformed in a heat pump. Coiled pipes in the ground must be placed at a frostless depth, e.g. at 1-2 meters' depth and with at least 1 meter's distance between the horizontal pipes, which for a detached house means a required area of 200-500 $m^2$ , depending on the character of the ground and the need of heat. There is a disadvantage in that a relatively large area of ground easy to dig is required in case it is a garden, must be exposed to large operations and consequently relatively high initial costs are involved, and this is the reason why this method has been used only to a limited extent.

It is previously known to arrange a heat exchange pipe in a steel tube, which is suitable for driving into the ground by means of a conventional pile driving equipment. The steel tube can be either water-filled or else the space between the inside of the steel tube and the heat exchange pipe can be filled with concrete. This device is comparable with the location of the heat exchanger pipe in a deep-drilled well, in which a heat exchanger coil has been brought down. The cost for the drilling of a well is considerable and so is the manufacture cost for the type of special piles mentioned above, and for this reason such constructions have so far not been competitive with heat coils placed in the ground surface layer.

## Summary of the invention

The object of the invention is to provide a relatively simple way of using soil heat without making bit operations in the garden. At new construction buildings, where piling is done, also the piles can be used to drive the heat exchanger into the ground to a suitable depth. Another object is to make it possible to store solar heat during the hot season and thus use the ground as a heat storage. This has been solved by arranging the coiled pipe on the outside of a driving means, e.g. a pile, a tube, a basket or the like, surrounding the coiled pipe by a protective jacket, and bringing these down together, either along the pile already located in the ground or in connection with the driving of the pile to the required depth in the ground and drawing pipings, coming from the coiled pipe, are drawn in the space arisen from the soil, which has been forced aside by said protective jacket, so that a connection is established between the coiled pipe and the ground surface.

## Description of the drawings

Figures 1, 2 and 3 show sections through three different modifications of heat exchangers connected to conventional concrete piles, and intended to be placed into the ground in connection with the driving of the pile,
Figure 4 shows a section through a tube for locating of the heat exchanger, in accordance with the invention without a pile,
Figure 5 shows a section through a device, in accordance with the invention, applicable to piles already driven into the ground.

## Description of an embodiment

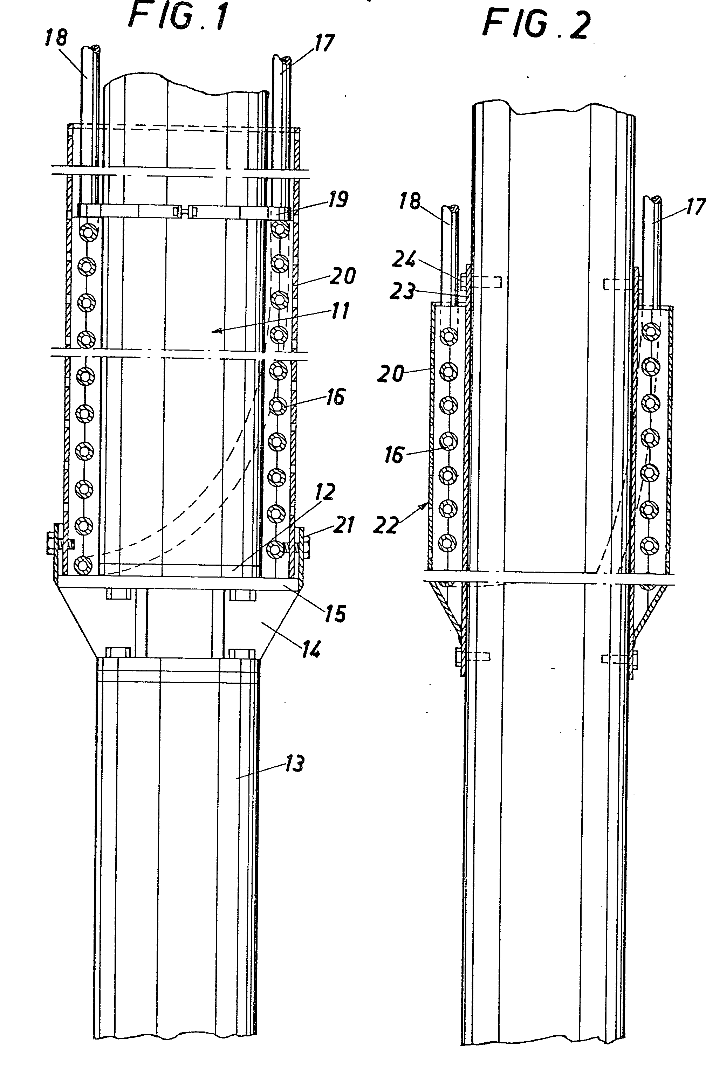

In the drawings, the numeral 11 denotes a driving means, which in figures 1-3 is a conventional concrete pile. In
figure 1 the concrete pile 11 is at its bottom end provided with a pile fitting 12 intended for connection with
a second pile 13. In the embodiment illustrated in figure
1, a connector 14 is arranged between the piles 11 and 13,
said connector 14 being provided with a connection plate
15 which is somewhat larger than the end surface of the
pile 11. A coiled pipe 16 is wound round the bottom end of
the pile 11 and this coiled pipe together with two connecting pipings 17 and 18 form a heat exchanger, which by means
of suitable fixing devices 19 is attached to said pile.
The coiled pipe 16 is surrounded by an outer tube 20,
serving as a protective jacket, said tube being either
attachable to a sleeve 21 at the connection plate 15, see
figure 1, or loosely passed over the pipe 16 and is removed after the pile has been located, so that the coiled
pipe 16 is uncovered.

Due to its particular design, the device according to the
invention can be mounted at the working place on to every
standarized pile.

The modified embodiment, illustrated in figure 2, differs
from the one shown in figure 1 by the fact that the coiled
pipe 16 is encased in a casing 22 having a ring-shaped
cross-section and comprising an outer tube 20 and an inner
tube 23, which by means of suitable attachments 24 can be connected to the pile 11. This device is particularly
suitable for wooden piles and also when the device can be
passed on to the pile and attached to the same.

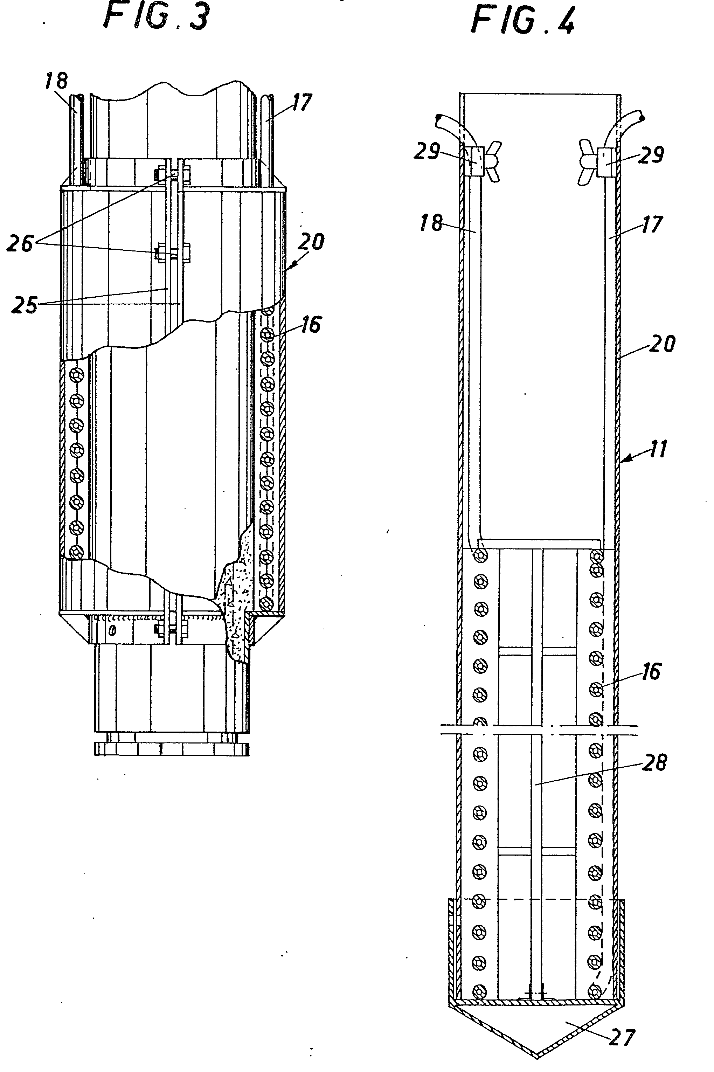

Figure 3 shows an embodiment where, for different reasons,
it is not possible to pass the heat exchanger device
on to the pile. This device consists of the coiled pipe
16, which is wound on to the pile with a required number
of rounds, after which an axially two part conduit 20, with flanges 25 arranged in the parting line, is attached
on the outside of the packet of coiled pipe. By means of
screw fastenings 26 both parts of the conduit can be
stretched and fixed to the pile 11.

In the embodiment according to figure 4 the driving device
11 comprises a protecting and driving tube 20, the bottom
end of which is loosely inserted into a pile shoe 27 connected to a basket 28, on which a coiled pile is wound. At
the top end of the conduit 20 there are fastenings 29 in
order to fix the connecting pipings 17 and 18.

The pile shoe 27, with the attached basket 28 and heat
exchanger 16 is via the protecting tube 20 driven into
the mass of soil down to a suitable depth, and after
that the fastenings 29 are loosened and the protecting
tube 20 is pulled up.

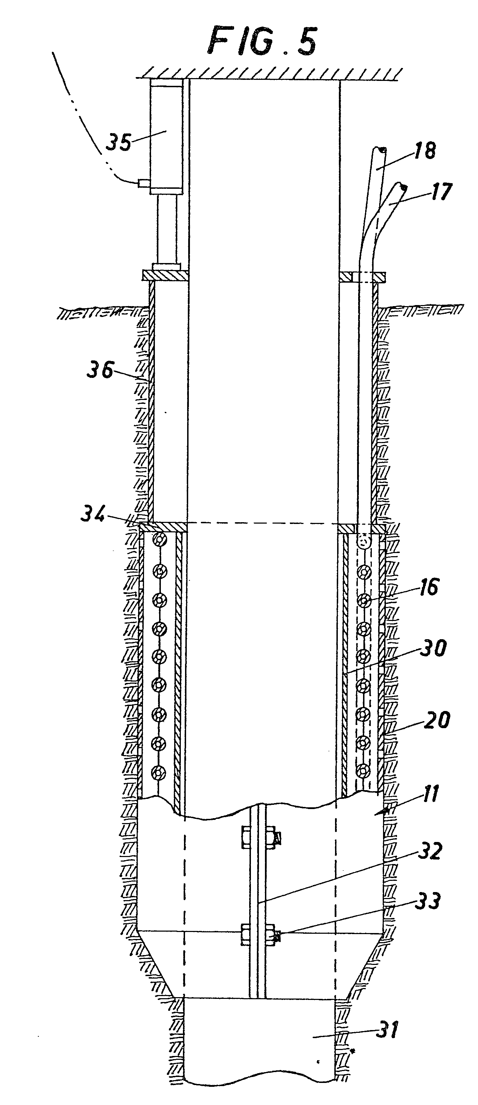

The device, illustrated in figure 5, is designed for locating heat exchangers, in accordance with the invention,
in piles which already are located in the ground and
connected to a building. The device consists of a two
part inner tube 30 and a likewise two part outer, somewhat larger tube 20, provided with axial flanges 32 in the
parting line. These are intended to be connected with
each other via bolt joints 33. In the space between the
outer and the inner tubes 20, 30, said coiled pipe 16 is
arranged, connecting pipings 17 and 18 of which are drawn
through openings in the outer tube. The diameter of the
inner tube 30 is somewhat larger than the outer diameter
of the pile 31, so that the device can easily slip onto
the pile. A ring-shaped pressure plate 34 is arranged at
the top ends of the two tubes. At the mounting of the device, the two inner halves of the tube 30 are placed on to
the pile end 31, extending above the ground and uncovered,
and after that the heat exchange pipe 16 is wound round the
inner tube 30. The two outer halves of the tube 20 are then
applied onto the outside of the coiled pipe, said halves of the tube being attached to one another by bolts 33. The completed heat exchanger device can then be pressed along the pile to a desired depth by means of jacks 35 and two part extension tubes 36.

The pile equipped with a heat exchanger can at new construction buildings be part of the regular point bearing piles of the building. In those cases where no point bearing piles are required, a number of piles, equipped with heat exchangers, are driven down into the ground next to the building and the only object of the pile will be to locate the heat exchanger at a suitable depth. The coiled pipe of the heat exchanger can be made of metal, e.g. copper or preferably of plastic. A suitable dimension would be e.g. 25 x 3 mm's pipes, which are to be wound round the pile along a distance of e.g. 2-4 m, which means a coiled pipe of about 100 meters.

For an oridnary detached house four or six such heat exchanger piles will be enough, said piles being driven down at a mutual distance of a couple of meters. If necessary, it is of course possible to arrange the coiled pipe with a greater length along the pile than is shown in the drawings.

Due to the fact that the heat exchanger packet according to the invention can be placed at a considerable depth in the strata of earth compared with coiled pipes located in the surface, this heat exchanger can during the hot season, also be used to emit heat, i.e. absorbed solar heat can be stored in the mass of soil surrounding the single heat exchange piles. The cooled fluid circulating through the coiled pipe can during the hot season also be used as a cooling medium (refrigerant) for air conditioning units.

The invention is not limited to the illustrated and described embodiments but a number of variations are possible within the scope of the claims.

C L A I M S

1. A method of locating a coiled pipe into the ground, vertically or inclined, said coiled pipe working as a heat exchanger in a heat pump system, c h a r a c t e r i - z.e d   i n, arranging the coiled pipe (16) on the outside of a driving means (11), e.g. a pile, a tube (30), a basket (28) or the like, surrounding the coiled pipe by a protective jacket (20), and bringing these down together either along the pile already located in the ground or in connection with the driving of the pile to the required depth in the ground, and drawing pipings (17, 18), coming from the coiled pipe           in the space arisen from the soil, which has been forced aside by said protective jacket, so that a connection is established between the coiled pipe (16) and the ground surface.

2. A method according to claim 1, c h a r a c t e r i - z e d   i n, wounding a coiled pipe (16) onto the un-covered top end of a pile (11), which is already located in the ground, applying a protective jacket (20) on the outside of said coiled pipe, pressing the coiled pipe (16) and the protective jacket by means of a pressing device (35) along the pile (11) to a suitable depth, removing the protective jacket (20) if desired, and connecting the connecting pipings (17, 18), coming from the coiled pipe to the heat pump system.

3. A method according to claim 1, c h a r a c t e r i - z e d   i n, arranging a coiled pipe (16) to a basket (28) provided with a pile shoe (27), arranging a protective jacket (20) round the basket and the coiled pipe, so that the end surface of said jacket makes contact with the pile shoe (31), driving this combined unit into a suitable depth in the ground, and drawing the protective jacket out, at which the coiled pipe is exposed and stays in the ground together with the pile shoe.

4. A device for absorbing and emitting heat or cold from resp. to the ground by means of at least one underground, coiled pipe, serving as a heat exchanger for a flowing gluid according to the method of claim 1, c h a r a c - t e r i z e d  i n, that the coiled pipe (16) is arranged on the outside of a driving means (11), e.g. a pile, a conduit, a basket or the like, which can be driven into the ground, said coiled pipe (16) at least during the driving being surrounded by a protective jacket (20), and that connecting pipings (17, 18), coming from the coiled pipe (16), are placed in the space arising at the driving of the device into the soil.

5. A device according to claim 4, c h a r a c t e r i - z e d  i n, that a coiled pipe (16), wound round the end part of a pile (11), is surrounded by a protective jacket (20), which is attachable to a connector (14) connectable to the end surface of the pile (11).

6. A device according to claim 4, c h a r a c t e r i - z e d  i n, that the coiled pipe (16) is encased in a casing (22) having a ring-shaped cross-section and comprising an outer (20) and an inner wall (23), said casing (22) by means of attachments (24) being attachable to the pile.

7. A device according to claim 4, c h a r a c t e r i - z e d  i n, that the coiled pipe is arranged to be surrounded by an axially two part protecting and fixing means (25), which by means of screw fastenings (26) is attachable to the pile (11).

FIG.1    FIG.2

# FIG.3

# FIG.4

# FIG.5